# EUROPEAN PATENT APPLICATION

(11) **EP 2 096 587 A1**
(43) Date of publication of application: **02.09.2009**
(21) Application number: 08152007.4
(22) Date of filing: 27.02.2008
(51) Int. Cl.: G06Q 10/00

(54) **Calendar for expanding and collapsing between a compact and a detailled view**

(71) Applicant: Research in Motion Limited, Waterloo, ON N2L 3W8 (CA)
(72) Inventor: Bocking, Andrew, Conestogo Ontario N0B 1N0 (CA); Lazaridis, Mihal, Waterloo Ontario N2L 6L8 (CA); McAndrews, Michael Patrick, Kitchener Ontario N2P 2L3 (CA)
(74) Representative: Patel, Binesh

(57) **Abstract**

A computer implemented method of presenting booked time slots and free time slots in a calendar application user interface is provided. The method comprises the steps of presenting a compact view showing only booked time slots from a memory device; and expanding a time block selected from the compact view in response to input at a processor to present a detailed view of the time block in the context of the compact view. The detailed view is defined in the memory device to show booked time slots and free time slots of the time block. The method may also comprise collapsing the time block to remove the detailed view from the compact view in the memory device. A handheld device and a computer program product are also provided.

## Description

### BACKGROUND

This matter relates in general to user interfaces for computer systems and more particularly to techniques for displaying and editing calendar appointment information.

The display screens of mobile handheld devices are by their nature small, especially when compared to the display screens of desktop computer systems. As a result of their small size, the amount and kind of information that can be presented on the handheld's display screen is restricted.

Application developers for handheld devices must often balance the kind of information to be displayed and the degree of detail required to be meaningful. One such application is a personal planner or appointment calendar, a common application on many handheld devices.

Many calendar applications provide a user interface according to a number of possible calendar views to a user. For example, the user interface may include daily, weekly and/or monthly views, each of which show both booked time slots and free (i.e. "un-booked") time slots. An additional view, sometimes referred to as an agenda view, is a collapsed calendar view that lists only the booked time slots.

The degree of detail and contextual information (such as showing a booked time slot in relation to its temporally contiguous time blocks and/or days) provided by any one of these views varies widely. The daily view, for example, provides the greatest level of detail (or granularity), an hourly account of the user's booked time and free time for the displayed day. However, the daily view provides very little useful contextual information. While in this view, the user is not provided with any information about other days. At the other end of the spectrum, the "time booked" view provides the most contextual information, since all booked times are presented. Unfortunately, however, little time slot specific detail is provided. Toggling or shifting among these views may often require a number of keystrokes or other UI inputs. Moreover, preparing, presenting and switching among the multiple UI views consumes processor time and other resources such as device battery life.

### SUMMARY

In accordance with a first aspect, a computer implemented method of presenting booked time slots and free time slots in a calendar application user interface is provided. The method comprises the steps of presenting a compact view from a memory device using a processor showing only booked time slots; and, expanding a time block selected from the compact view in response to receiving input at the processor to present a detailed view of the time block in the context of the compact view. The detailed view is defined in the memory device to show booked time slots and free time slots of the time block.

The method may also comprise collapsing the time block to remove the detailed view from the compact view in the memory device.

Additionally, the method may comprise presenting a time slot editing user interface with which to edit at least one of the booked time slots and free time slots of the time block at the processor; receiving input at the processor to edit at least one time slot; and, storing the result.

In accordance with another aspect, a computer program product is provided. The computer program product comprises computer readable code embodied therein which when executed by a processor adapts a computing device to present booked time slots and free time slots in a calendar application user interface. The code adapts the computing device to present a compact view from the memory device showing only booked time slots; and, expand a time block selected from the compact view in response to receiving input at the processor to present a detailed view in the context of the compact view. The detailed view is defined in the memory device to show booked time slots and free time slots of the time block.

Additionally, the code may adapt the computing device to collapse the time block to remove the detailed view from the compact view in the memory device.

The code may also adapt the computing device to present a time slot editing user interface with which to edit at least one of the booked time slots and free time slots of the time block at the processor; receive input at the processor to edit at least one time slot; and, store the result.

In accordance with another aspect, a handheld device for presenting booked time slots and free time slots in a user interface of a calendar application on a display screen of the handheld is provided. The handheld device further comprises: a memory device for storing views of the user interface, a processor and a button to provide an input to the processor to cause the handheld device to: present a compact view from the memory device showing only booked time slots; expand a time block selected from the compact view in response to the input at the processor to present a detailed view of the time block in the context of the compact view, the detailed view defined in the memory device to show booked time slots and free time slots of the time block; and collapse the time block at the processor, removing the detailed view when presenting the compact view from the memory device.

### BRIEF DESCRIPTION OF THE DRAWINGS

Embodiments will now be described, by way of example only, with reference to the attached figures, wherein:

Figure 1 is a block diagram of a mobile electronic device and a communication system to which embodiments may be applied;

Figure 2 is a front view of a mobile electronic device to which embodiments may be applied;

Figure 3A is a front view of a device illustrating a first view of a calendar application user interface according to an embodiment;

Figure 3B is a front view of a device illustrating a second view of a calendar application user interface according to an embodiment;

Figure 4 illustrates a user interface of a calendar application according to an embodiment;

Figure 5 illustrates a user interface of a calendar application according to an embodiment;

Figure 6 illustrates a user interface of a calendar application according to another embodiment;

Figure 7 illustrates a user interface of a calendar application according to another embodiment; and,

Figure 8 is a flowchart of a method for a calendar application user interface in accordance with an embodiment.

### DETAILED DESCRIPTION

In the following description and drawings, like reference numerals refer to similar elements and features.

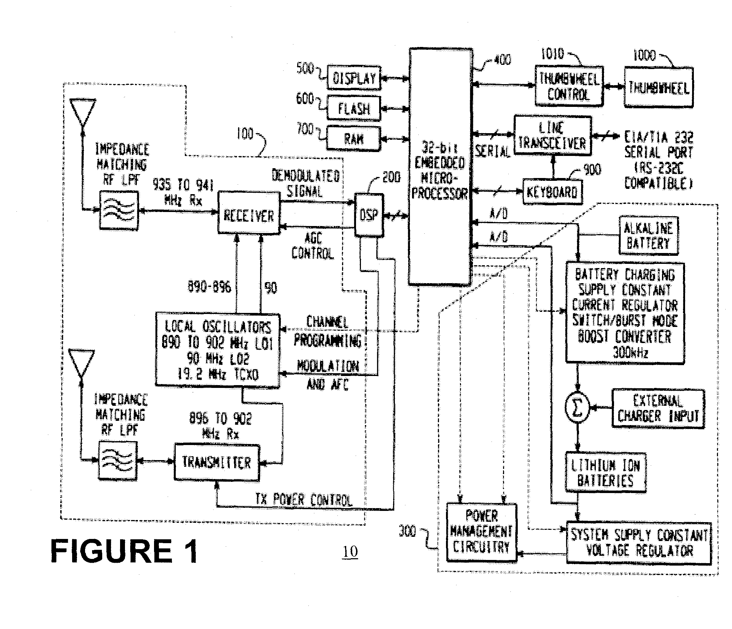

Referring now to FIG. 1, there is shown a block diagram of the major subsystems and elements comprising a palm-sized, mobile, two-way messaging device 10 that preferably incorporates aspects of the embodiments. In its broadest terms, the messaging device includes a transmitter/receiver subsystem 100 connected to a DSP 200 for digital signal processing of the incoming and outgoing data transmissions, power supply and management subsystem 300 (which supplies and manages power to the overall messaging device components), microprocessor 400 (which is preferably an X86 architecture processor that controls the operation of the messaging device), display device 500 (which is preferably a full graphic LCD), FLASH memory 600, RAM 700, serial output port, keyboard 900, thumbwheel 1000 and thumbwheel control logic 1010.

In its intended use, a message comes via a wireless data network (such as the Mobitex network) into subsystem 100, where it is demodulated via DSP 200 and decoded and presented to microprocessor 400 for display on display 500. Other wireless data networks may also be used such as iDEN, GPRS/GSM 1x, etc.

The keyboard 900 and thumbwheel 1000 can also be used to permit data entry to an address book resident on the messaging device, or an electronic calendar or log book, or any other function on the messaging device requiring data entry. Preferably, the thumbwheel is of a type that includes a push button switch.

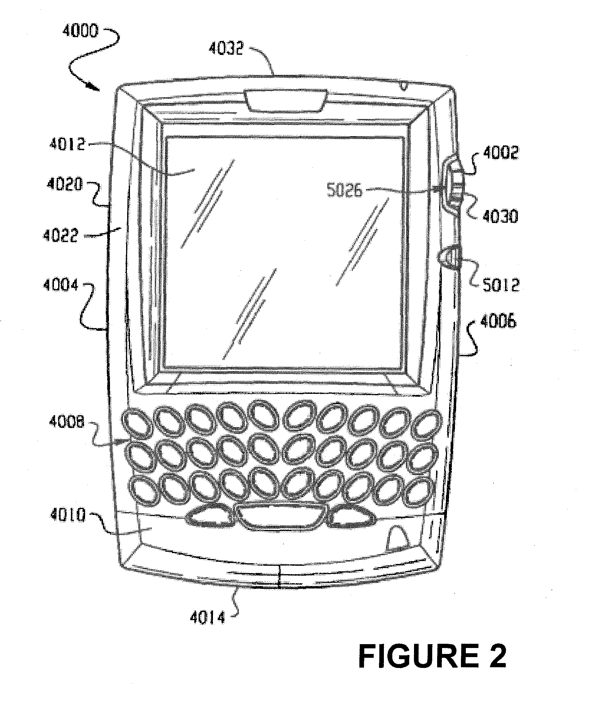

Referring to FIG. 2 there is shown a front view of a housing 4000 for a handheld device 10 that incorporates an embodiment. The device 10 is shown in the ordinary operating/viewing position. During operation, the device 10 would be held by and between the user's left and right hands at the left and right side edges 4004 and 4006 of the device housing 4000. The keyboard 4008 is thus elongated horizontally across the front 4010 of the device housing 4000 at a location between the display screen 4012 and the lower edge 4014 of the device housing 4000.

As described earlier the housing 4000 houses a microprocessor with a software application for providing a plurality of thumb-based operational features upon certain inputs from the keyboard 4008 and the thumbwheel 4002, as described above. Rolling the thumbwheel 4002 provides a scrolling/navigating function while depressing the thumbwheel switch 5026 serves an activation/selection function.

In general the device software provides a number of navigation aids for most user input tasks. The navigation aids maximize the likelihood that there will be a graphical interface that the user finds intuitive. The aids allow most input tasks to be performed completely using either the keyboard or the thumbwheel. The navigation aids are preferably incorporated into choice boxes and menus of the device software. A choice box is graphical interface wherein only one selection is displayed at one time. The other possible selections are displayed one at a time by a navigation means. A menu, on the other hand, is a graphical interface wherein a multiplicity of all selections (menu items) for a particular input is displayed at one time.

The thumbwheel 4002 can be used to move a cursor through the menu and through the list of menu items. For example, rotating the thumbwheel in a first direction, such as "down," can cause the cursor to scroll through the menu items in the menu, to permit a user to highlight a desired menu item. Thus, when the cursor is highlighting the first item, moving the thumbwheel in the first direction may cause the cursor to highlight another menu item, such as for example, an edit menu item. The items associated with the highlighted menu item may be displayed as discussed above.

Moving the thumbwheel in a second direction, such as "up" can cause the cursor to scroll through the displayed menu items in an opposite direction to enable a user to highlight a desired item.

A highlighted item can be executed by using the thumbwheel switch 5026. For example, "pressing" the thumbwheel 4002 may cause the device to execute a highlighted item.

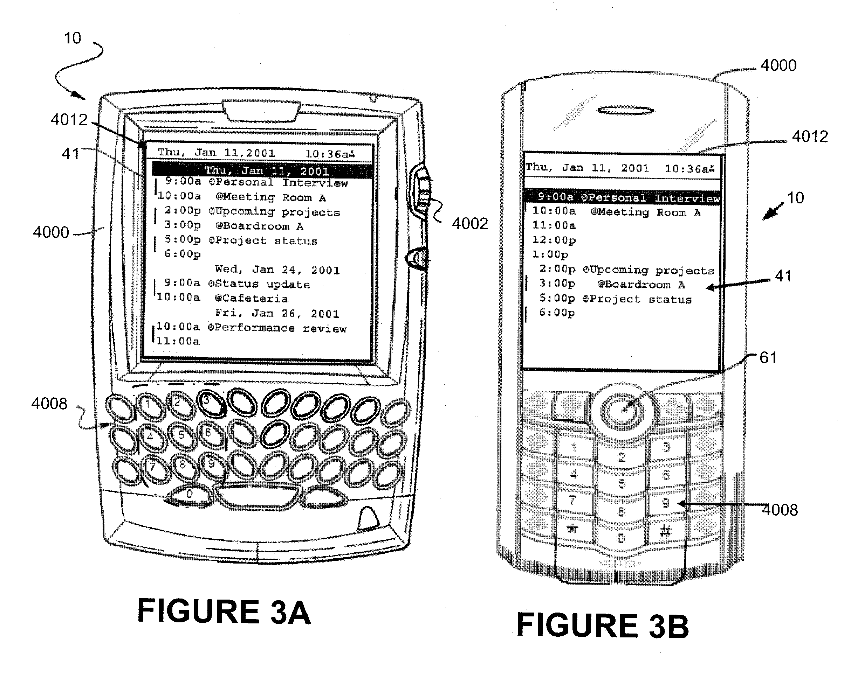

Still referring to Figure 2 and referring to Figures 3A and 3B, a calendar application is one of a number of applications that may be resident in the device 10. A user interface 41 for the calendar application may be provided on the display screen 4012 according to any one of a number of available views. For example, the user interface of the calendar application may include a daily, weekly and/or monthly view. Additionally, the user interface of the calendar application may be a compact (or agenda) view, which displays only booked time slots. Figures 3A and 3B illustrate two of the above-noted views, namely an example agenda view (3A) and an example daily view (3B).

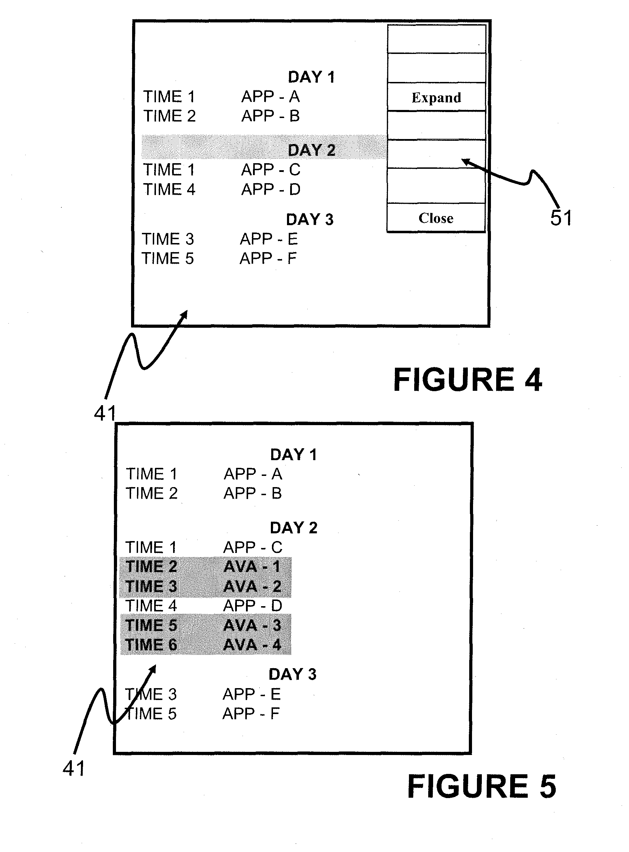

The daily view lists all time slots for a given day, booked or not. The agenda view, in contrast, displays only the booked time slots. Another example of an agenda or compact view is illustrated in Figure 4, a schematic representation of an agenda view. The compact view of Figure 4 shows a list having respective day separators (DAY 1, 2, 3) and booked time slots (TIME 1, for example). The day separators thus define respective daily time blocks. A brief description of the booked activity is also displayed (at TIME 1 of DAY 1, for example, APP-A is booked).

In operation, a user of device 10 may employ an input device, such as the thumbwheel 4002, to select and invoke the user interface 41 for the calendar application. As will be apparent, any suitable input device may be used in the present matter, such as a keypad, touch screen, touch pad, track ball, joystick, etc.

In the present matter, a preferred view of the calendar application user interface is the compact view (as in Figure 4 for example). The list of day separators and booked time slots may be navigable by moving a focus through the list. This view is preferably a read-only view. The user may use the thumbwheel 4002 (as in Figure 3A) or a track ball 61 (as in Figure 3B) to select a time block to be expanded in a detailed view. The time block may be a particular day, or portion of a day. For example, the user may choose to expand all of DAY 2. In doing so, the user may use the thumbwheel 4002 to scroll down to the date separator for DAY 2, which is indicated by the date DAY 2.

The selected time block (e.g., day) may be expanded in any one of a number of ways. Preferably, however, the user, after having scrolled to the selected date, clicks the thumbwheel 4002 and the device 10 in response displays a menu 51, which includes a number of action options. One such option allows the user to expand the selected time block. The user, using the thumbwheel 4002, may scroll down to the "expand" menu option. Alternately, the "expand" menu option may be the default option available on opening the menu 51. After having selected the "expand", the user may push the thumbwheel 4002 to invoke the associated operation of the calendar's user interface.

In response to the input, the selected time block is expanded to expose a detailed view of the user interface, as is shown in Figure 5. The detailed view is presented in the context of the compact view, as a hybrid view; i.e., showing booked time slots and free time slots for the selected time block.

The detailed view of the display of Figure 5 illustrates all the time slots (TIMES 1 - 6) in the day (DAY 2), whether booked or free. The free time slots (TIMES 2, 3, 5, 6) may include a reference indicating availability (e.g., AVA), or alternately and preferably may be left blank. In a further embodiment, the free time slots may be highlighted by any suitable manner, as is illustrated in Figure 5, thereby drawing the user's attention to the free time slots.

While in this hybrid (expanded/compact) view, the user may assess his or her availability for the time slots in the expanded time block, while at the same time remaining cognizant of the other booked time slots shown in the compact view. The detailed view may be a read-only view. Alternately and preferably, the detailed view is editable (a read/write view). As such, the detailed view comprises a user interface to edit time slots of the selected time block, which may be either booked time slots or free time slots.

The user, while in the detailed view, may use the thumbwheel 4002 (or any other suitable user input means) to scroll to select the time slot of interest. The user may use one (or a combination) of the input means, such as the thumbwheel 4002 or keyboard 4008 to edit the time slot. Editing may consist of deleting or amending a previously booked time slot, or booking a previously free time slot. Once all desired edits have been stored, the expanded time block may be collapsed back to the compact (agenda) view, which now reflects the user made edits.

As will be apparent, the user interface 41 provided by the device 10 is configured to receive the inputs (e.g., time slot edit), save the resulting edit in the memory of the device 10, and reflect the result of the edit to the user in any one of the user interface options available to the user. Alternately, the edits may be saved remotely (where the device 10 is configured to communicate the edits to a remote location), and made accessible from the remote location to the device 10. The edit may also be saved locally (on device 10) and remotely.

The detailed view may be collapsed by any suitable user interface 41 interaction. For example, the device 10 may display in response to an input from the user (e.g., by way of clickwheel 4002), a menu having a menu option for prompting the user to collapse the expanded time block. The user may then select the collapse menu option, thereby resulting in the detailed view being collapsed to the compact view. The collapse menu is similar to the menu 51 illustrated in Figure 4. One difference, however, is the presence of the collapse menu option and absence of the expand menu option.

Still referring to Figure 5, the detailed view presented in the context of the compact view is shown as the detailed view nested within the compact view. That is, when expanding a particular time block to present a detailed view, the compact view for other time blocks is maintained, though the position of such on the display screen may move to accommodate the expansion. It will be further appreciated that the expansion of a particular time block in a detailed view that is nested within the compact view of adjacent time blocks may even cause the showing of the adjacent compact view to at least partially scroll off the display screen. In the view illustrated in Figure 5, the compact view for time blocks Day 1 and Day 3 is maintained when the detailed view for time block Day 2 is presented between these time blocks.

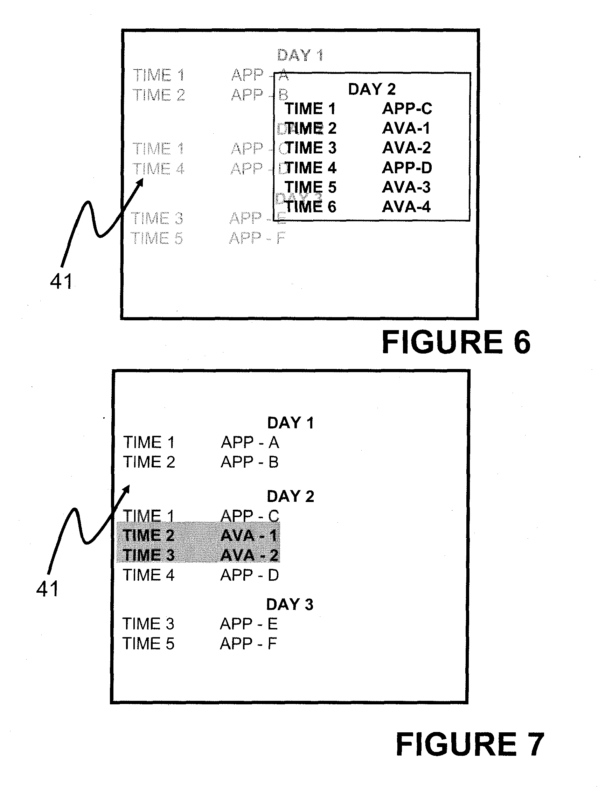

Referring to Figure 6, the detailed view presented in the context of the compact view may alternately be shown as the detailed view superimposed over the compact view. In this alternate embodiment, the compact view is preferably at least partially viewable through the detailed view. Figure 6 illustrates the compact view in the background and the detailed view is featured prominently over the compact view. The foreground prominence of the detailed view may be achieved in any suitable manner. For example, the text of the detailed view may be bolder compared to the text or the compact view. Having the compact view partially viewable through the detailed view enhances the contextual information provided by the compact view.

Figures 5 and 6 illustrate a calendar date as the selected time block to be expanded. The present matter, however, need not be limited to a date as the sole unit of selectable and expandable time. Figure 7 illustrates a portion of a calendar day as the selected time block. In the illustrated example, the time block expanded is TIME 2 and TIME 3 of DAY 2. The remaining time slots of DAY 2 remain collapsed.

In accordance with an embodiment, a computer implemented method of presenting booked time slots and free time slots in a calendar application user interface is provided. As described above and in further detail below, views of the user interface are defined using the processor and memory device for presenting to a user via a display device. The method comprises the steps of presenting a compact view from a memory device using a processor showing only booked time slots; and expanding a time block selected from the compact view in response to input at the processor to present a detailed view in the context of the compact view. The detailed view is defined in the memory device to show booked time slots and free time slots of the time block.

The method may also comprise collapsing the time block to remove the detailed view from the compact view in the memory device.

The method preferably comprises presenting a time slot editing user interface with which to edit at least one of the booked time slots and free time slots of the time block; receiving input at the processor to edit at least one time slot; and, storing the result. The result is presented in the compact view accordingly.

The method also preferably comprises presenting separators, such as date separators among the booked time slots to define daily time blocks and receiving input to expand a one of the daily time blocks. As a result, the compact view preferably comprises a list of respective date separators and booked time slots. The compact view is preferably navigable by moving a focus through the list, for example, to select a respective date separator for expanding the associated daily time block. Other separators may include morning and afternoon separators for different time block granularity.

The method preferably comprises providing a menu having an option to expand the time block selected from the compact view to present the detailed view.

Additionally, the method preferably comprises providing a menu having an option to collapse the expanded time block to present the compact view.

In a preferred embodiment, the method comprises nesting the detailed view within the compact view. Alternately, the method comprises superimposing the detailed view over the compact view such that the compact view is at least partially viewable (e.g. through the detailed view).

At least one of the free time slots may be highlighted.

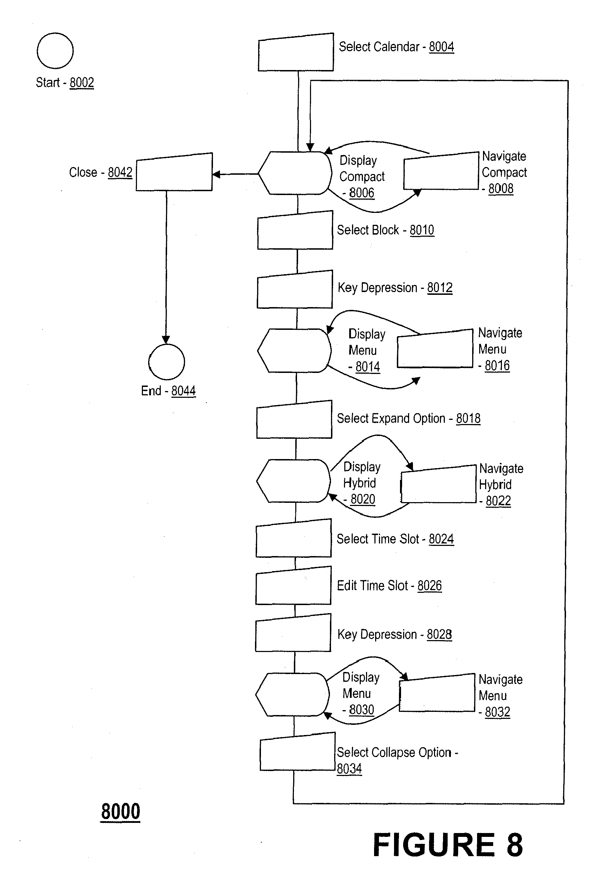

Referring now to Figure 8 (and referencing Figure 2), there is shown a flowchart that describes operations 8000 in accordance with an embodiment of a user interface for a calendar application. Operations 8000 show steps to present a compact view of calendar information in a device 10. The device 10 is preferably a handheld device.

Beginning at start block 8002, operations 8000 commence. At step 8004, the user selects the calendar application (which may be initiated through the action of the thumbwheel 4002). At step 8006, a compact view of calendar information is presented to the user. Through the action of a user input, such as thumbwheel 4002, the user may navigate the compact view (by moving a focus through the list of booked times slots that make up the compact view, for example) (step 8008). At any point during the navigating step 8008, the user may elect to close the calendar application (step 8042) and end the method (step 8044).

When navigating the compact view, the user may identify and select a time block to expand (step 8010). The time block may be selected by way of the thumbwheel 4002, for example, by scrolling to the desired time block. Once at the desired time block, the user by a button action (such as with thumbwheel 4002, or a keystroke from keypad 4008) (step 8012) causes a menu to be displayed (step 8014). The displayed menu may include a number of options, which may be navigated in the same manner previously discussed (step 8016). One menu option is to expand the selected time block. The user may elect to exit the menu, which returns the user to the compact view.

At step 8018, the expand menu option is invoked and the user interface presents a combined compact/detailed (or hybrid) view of the calendar information (step 8020). Once in the user interface hybrid view, the user may employ the thumbwheel 4002 to navigate the time slots of the hybrid view (step 8022). In so navigating, the user may select a time slot to edit (step 8024), which is edited at step 8026 by way, preferably, of the combined actions of the thumbwheel 4002 and keypad 4008. Editing may be invoked by a menu option (not shown) to present an editing interface for entering calendar information. A save option to store the results may also be provided (not shown).

Once the selected time slot is edited, the user by button action (such as with thumbwheel 4002, or a keystroke from keypad 4008) (step 8028) causes a menu to be displayed (step 8030). The displayed menu may include a number of options, which may be navigated in the same manner previously discussed (step 8032). One menu option is to collapse the selected time block. The user may elect to exit the menu, which returns the user to the hybrid view.

At step 8034, the collapse menu option is selected, which results in compact view being displayed (step 8006). Once in the compact view, the user may employ the thumbwheel 4002 to navigate the time slots of the compact view (step 8006). Alternately, the user may elect to close the calendar application (step 8042) (e.g., by pressing a "cancel" button) and end the method (step 8044).

It will be appreciated that expanding a time block to present a detailed view of that time block in the context of a compact view facilitates the display of a greater amount of pertinent information on a single page (or relatively few pages) rendered for display screen 4012. Alternative methods define separate compact views, daily views and additional detailed views. The user must navigate among these views to determine the desired information, switching views (i.e. pages displayed to the display screen) as necessary to locate same. Processing time and battery power are used to render each new screen on the display 4012 as the processor functions to determine what is rendered and where. Thus, each new page for the screen that is rendered in the calendar GUI uses additional processing time and power consumption. As daily views tend to show more information for each day than compact views for the same periods, navigating daily views for multiple days to locate contextual information typically requires additional resource consumption. With fewer screens rendered to provide pertinent information when a detailed view for a selected time block is presented in the context of the compact view, there is therefore a corresponding savings in processing time and power consumption, resulting in less delay as a result of processing time and increased battery life between charging of the battery 300 at the portable electronic device 10.

While certain features of the matter have been illustrated as described herein, many modifications, substitutions, changes and equivalents will now occur to those skilled in the art. It is, therefore, to be understood that the appended claims are intended to cover all such embodiments and changes as fall with the spirit of this matter.

## Claims

1. A computer implemented method of presenting booked time slots and free time slots in a calendar application user interface, the method comprising the steps of:
presenting a compact view from a memory device using a processor showing only booked time slots; and
expanding a time block selected from the compact view in response to receiving input at the processor to present a detailed view of the time block in the context of the compact view, the detailed view defined in the memory device to show booked time slots and free time slots of the time block.

2. The method of claim 1 comprising collapsing the time block to remove the detailed view from the compact view in the memory device.

3. The method of claim 2 comprising providing a menu having an option to invoke the processor to collapse the expanded time block to present the compact view from the memory device.

4. The method according to any one of claims 1 to 3 comprising:
presenting a time slot editing user interface with which to edit at least one of the booked time slots and free time slots of the time block at the processor;
receiving input at the processor to edit at least one time slot; and,
storing the result.

5. The method of claim 4 comprising displaying the compact view from the memory device in accordance with the result.

6. The method according to any one of claims 1 to 5 wherein the step of presenting a compact view comprises showing respective date separators from the memory device to define daily time blocks for the booked time slots and wherein the respective date separators are selectable at the processor for expanding the associated daily time block.

7. The method of claim 6 wherein the compact view comprises a list in the memory device defined by the processor from the booked time slots and the respective date separators and
wherein the compact view is navigable by moving a focus through the list thereby to select one of the respective date separators at the processor.

8. The method according to any one of claims 1 to 7 comprising providing a menu having an option to invoke the processor to expand the time block selected from the compact view to present the detailed view from the memory device.

9. The method according to any one of claims 1 to 8 comprising nesting the detailed view within the compact view.

10. The method according to any one of claims 1 to 9 comprising superimposing the detailed view over the compact view such that the compact view is at least partially viewable.

11. The method according to any one of claims 1 to 10 comprising highlighting at least one of the free time slots.

12. A computer program product comprising computer readable code embodied therein which when executed by a processor coupled to a memory device adapts a computing device to perform in accordance with any one of method claims 1 to 11.

13. A handheld device for presenting booked time slots and free time slots in a user interface of a calendar application, the device comprising
a memory device storing computer readable code defining the calendar application;
a processor coupled to the memory for executing the calendar application;
a display screen for displaying the user interface of the calendar application; and
a button to provide an input,
wherein when the code is executed by the processor and operated using the button the handheld device is adapted to perform a method according to any one of claims 1 to 11.

## Amended claims

### Amended claims in accordance with Rule 137(2) EPC.

**1.** A computer implemented method of presenting booked time slots and free time slots in a calendar application user interface, the method comprising the steps of:
presenting a compact view from a memory device using a processor showing only booked time slots from a plurality of time blocks; and
expanding a time block selected from the compact view in response to receiving input at the processor to present a detailed view of the time block in the context of the compact view, the detailed view defined in the memory device to show booked time slots and free time slots of the time block.

**2.** The method of claim 1 wherein the compact view shows a time and description for each booked timeslot.

**3.** The method of claim 1 or claim 2 wherein expanding a time block selected from the compact view comprises maintaining the presenting of the compact view for at least some of the plurality of time blocks thereby to present the detailed view in the context of the compact view.

**4.** The method of any one of claims I to 3 comprising collapsing the time block to remove the detailed view from the compact view in the memory device.

**5.** The method of claim 4 comprising providing a menu having an option to invoke the processor to collapse the expanded time block to present the compact view from the memory device.

**6.** The method according to any one of claims 1 to 5 comprising:
presenting a time slot editing user interface with which to edit at least one of the booked time slots and free time slots of the time block at the processor;
receiving input at the processor to edit at least one time slot; and,
storing the result.

**7.** The method of claim 6 comprising displaying the compact view from the memory device in accordance with the result.

**8.** The method according to any one of claims 1 to 7 wherein the step of presenting a compact view comprises showing respective date separators from the memory device to define daily time blocks for the booked time slots and wherein the respective date separators are selectable at the processor for expanding the associated daily time block.

**9.** The method of claim 8 wherein the compact view comprises a list in the memory device defined by the processor from the booked time slots and the respective date separators and wherein the compact view is navigable by moving a focus through the list thereby to select one of the respective date separators at the processor.

**10.** The method according to any one of claims 1 to 9 comprising providing a menu having an option to invoke the processor to expand the time block selected from the compact view to present the detailed view from the memory device.

**11.** The method according to any one of claims 1 to 10 comprising nesting the detailed view within the compact view.

**12.** The method according to any one of claims 1 to 11 comprising superimposing the detailed view over the compact view such that the compact view is at least partially viewable.

**13.** The method according to any one of claims 1 to 12 comprising highlighting at least one of the free time slots.

**14.** A computer program product comprising computer readable code embodied therein which when executed by a processor coupled to a memory device adapts a computing device to perform in accordance with any one of method claims 1 to 13.

**15.** A handheld device for presenting booked time slots and free time slots in a user interface of a calendar application, the device comprising
a memory device storing computer readable code defining the calendar application;
a processor coupled to the memory for executing the calendar application;
a display screen for displaying the user interface of the calendar application; and
a button to provide an input,
wherein when the code is executed by the processor and operated using the button the handheld device is adapted to perform a method according to any one of claims 1 to 13.
